(19) **Europäisches Patentamt / European Patent Office / Office européen des brevets**

(11) **EP 1 769 499 B1**

(12) **EUROPEAN PATENT SPECIFICATION**

(45) Date of publication and mention
of the grant of the patent:
**03.09.2008 Bulletin 2008/36**

(51) Int Cl.:
**G11B 7/09** (2006.01)      **G11B 7/14** (2006.01)
**G11B 7/13** (2006.01)

(21) Application number: **05759910.2**

(22) Date of filing: **11.07.2005**

(86) International application number:
**PCT/IB2005/052289**

(87) International publication number:
**WO 2006/008694 (26.01.2006 Gazette 2006/04)**

(54) **FOCUS CONTROL IN A MULTIPLE-BEAM DISC DRIVE**

FOKUSSTEUERUNG EINES MEHRSTRAHLPLATTENLAUFWERKS

COMMANDE DE FOCALISATION DANS UN LECTEUR DE DISQUE A FAISCEAUX MULTIPLES

(84) Designated Contracting States:
**AT BE BG CH CY CZ DE DK EE ES FI FR GB GR HU IE IS IT LI LT LU LV MC NL PL PT RO SE SI SK TR**

(30) Priority: **14.07.2004 EP 04103357**

(43) Date of publication of application:
**04.04.2007 Bulletin 2007/14**

(73) Proprietor: **Koninklijke Philips Electronics N.V.**
**5621 BA Eindhoven (NL)**

(72) Inventors:
• **TUKKER, Teunis Willem**
**75008 Paris (FR)**
• **LIEDENBAUM, Coen T. H. F.**
**75008 Paris (FR)**
• **VAN DER LEE, Alexander M.**
**75008 Paris (FR)**

(74) Representative: **Uittenbogaard, Frank**
**Philips**
**Intellectual Property & Standards**
**P.O. Box 220**
**5600 AE Eindhoven (NL)**

(56) References cited:
**WO-A-99/19868           US-A- 4 581 529**
**US-A- 4 633 455          US-A- 5 394 385**
**US-A- 5 808 983          US-A- 6 151 289**

• **ALEXANDER VAN DER LEE, DOMINIQUE BRULS, CHRISTOPHER BUSCH, ANDRE IMMINK, WIM COENE, ANDRIES HEKSTRA: "Two-Dimensional Optical Storage" JAPANESE JOURNAL OF APPLIED PHYSICS, vol. 43, no. 7B, 29 July 2004 (2004-07-29), pages 4912-4914, XP002347786**

EP 1 769 499 B1

**Description**

FIELD OF THE INVENTION

The present invention relates to the field of optical recording and optical readout. More specifically, the present invention relates to the field of writing/reading information into/from an optical storage medium. A well-known optical storage medium is an optical storage disc; therefore, the present invention will be explained in conjunction with optical storage discs, but it is explicitly noted that this is not to be interpreted as limiting the scope of the invention since the invention is also applicable to other types of optical storage medium.

BACKGROUND OF THE INVENTION

As is commonly known to persons skilled in the art, an optical storage disc comprises storage space where information may be stored in the form of a data pattern. Optical discs may be read-only type, where information is recorded during manufacturing, which information can only be read by a user. The optical storage disc may also be a writable type, where information may be stored by a user.

For writing information into the storage space of the optical storage disc, or for reading information from the disc, a disc drive apparatus (hereinafter also indicated as "optical disc drive") comprises, on the one hand, rotating means for receiving and rotating the optical disc, and on the other hand optical scanning means for generating an optical beam, typically a laser beam, and for scanning the storage space with said laser beam. Since the technology of optical discs in general, the way in which information can be stored in an optical disc, and the way in which optical data can be read from an optical disc, is commonly known, it is not necessary here to describe this technology in more detail.

Said optical scanning means comprise a light beam generator device (typically a laser diode), an optical detector for receiving light reflected from the disc and for generating an electrical detector output signal, means for directing light from the generator towards the disc, and means for directing reflected light from the disc towards the detector. The reflected light is modulated by the data pattern of the disc, which modulation translates into modulation of the electrical detector output signaL

During operation, the light beam should remain focussed on the disc. To this end, the objective lens is arranged axially displaceable, and the optical disc drive comprises focal actuator means for controlling the axial position of the objective lens.

There are systems where the optical scanning means comprise only one laser beam, projecting only one focus spot on the disc. An example of such system is indicated as a 1D system: the data is arranged in a linear spot pattern, indicated as a track, either in the form of a continuous spiral or in the form of multiple concentric circles. A 1D disc can have multiple tracks. In such system, only one laser beam needs to be focussed, and the focal actuator means only need to optimize the axial position of the objective lens with a view to optimizing the focus condition of this one laser beam.

However, there also exist multi-spot systems, i.e. systems where a plurality of optical beams are generated, simultaneously projecting a plurality of focus spots. An example of such system is indicated as a 2D system: the data is arranged in a 2D structure, read out by multiple spots. It is also possible that multiple tracks of a 1D disc are simultaneously read out by multiple spots. Typically, these multiple spots are located substantially on a straight line, which makes an angle with the spot displacement direction (or better: medium displacement direction, i.e. tangential direction in the case of discs).

For each spot of such multi-spot system, it is desirable that the spot is accurately focussed on the storage space of the disc. However, such multiple focus condition is very difficult to achieve, or this may even be impossible, for instance due to the fact that optical discs are usually not perfectly flat, or for instance due to the fact that the objective lenses have a field curvature so that the multiple beam spots are not located exactly in one flat plane. Further, it is not possible to adapt the axial position of the multiple focus spots individually: it is only possible to axially shift all focus spots simultaneously. This means that, in practice, only one or two laser beams at maximum will be in an accurate focus condition, while the other beams are out-of-focus to a lesser or larger extent.

According to a second aspect of the present invention, focus control is performed using one specific optical beam selected such that, when this specific optical beam is in an accurate focus condition, the out-of-focus condition for the system as a whole, i.e. all beams considered together, is as small as possible.

It is noted that a method as recited in the preamble of claim 1 is disclosed in WO99/19868. In the method according to this document, for N = 3, 5, 7 or 9, the position of the adjustable objective lens is controlled to be substantially equal to the optimum setting $Z_{OPTIMUM}$, so that the axial position of the storage layer of the disc is located midway between the axial position of the central focus spot and the axial position of the outermost focus spots. In that case, however, none of the focus spot(s) actually coincides with the storage layer of the disc. Further, for tracking purposes and focus control, error signals are derived on the basis of the reading signal obtained from the central beam, but this beam is associated with a focus spot having the largest axial distance from the storage layer of the disc.

A method in accordance with the present invention has the features of claim 1, providing that two focus spots actually coincide with the storage layer of the disc. In a preferred method, specified in claim 5, the light beam associated with one of these focus spots is used for focus control. In another preferred method, specified in claim 6, both light beams associated with both of these focus spots are used for focus control.

BRIEF DESCRIPTION OF THE DRAWINGS

These and other aspects, features and advantages of the present invention will be further explained by the following description with reference to the drawings, in which same reference numerals indicate same or similar parts, and in which:

Figure 1 schematically illustrates relevant components of an optical disc drive apparatus;
Figure 2A illustrates multiple individual optical beams; Figure 2B is a schematic top view of a portion of a storage layer of an example of a 2D encoded disc;
Figure 2C illustrates multiple individual focus spots located in a curved focal plane;
Figures 3A and 3B schematically illustrate the relative positioning of multiple spots, for an odd number of spots and an even number of spots, respectively;
Figures 4A and 4B schematically illustrate two systems for numbering spots, for an odd number of spots and an even number of spots, respectively;
Figures 5A and 5B are tables, illustrating optimum values of m as a function ofN, for an odd number of spots and an even number of spots, respectively;
Figure 6 is a diagram, schematically illustrating a preferred detail of an optical system according to the present invention.

DETAILED DESCRIPTION OF THE INVENTION

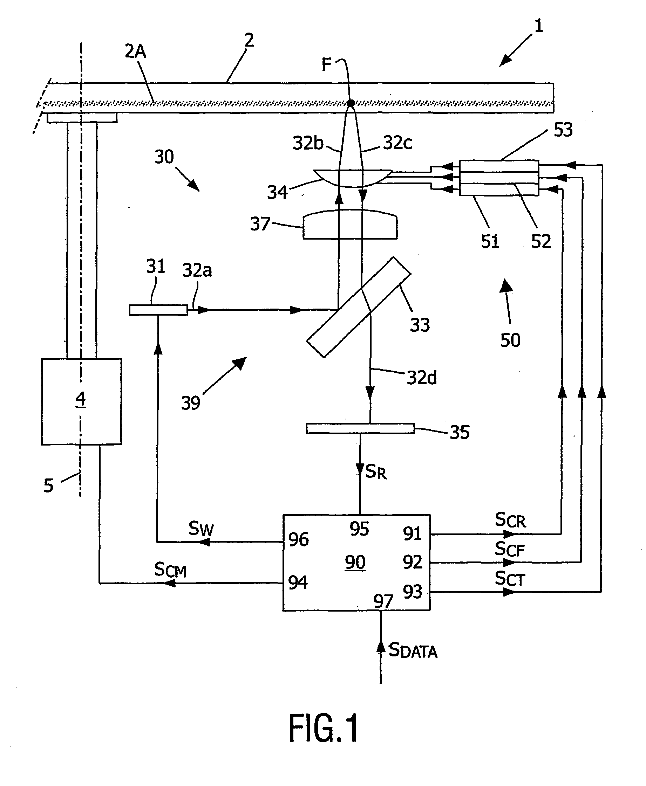

Figure 1 schematically illustrates an optical disc drive apparatus 1, suitable for storing information on and reading information from an optical disc 2, typically a DVD or a CD. The disc 2, of which the thickness is shown in an exaggerated way, has at least one storage layer 2A. For rotating the disc 2, the disc drive apparatus 1 comprises a motor 4 fixed to a frame (not shown for the sake of simplicity), defining a rotation axis 5.

The disc drive apparatus 1 further comprises an optical system 30 for scanning the disc 2 by an optical beam. More specifically, in the exemplary arrangement illustrated in Figure 1, the optical system 30 comprises a light beam generating means 31, typically a laser such as a laser diode, arranged to generate a light beam 32. In the following, different sections of the light beam 32, following an optical path 39, will be indicated by a character a, b, c, etc. added to the reference numeral 32.

The light beam 32 passes a beam splitter 33, a collimator lens 37 and an objective lens 34 to reach (beam 32b) the disc 2. The light beam 32b reflects from the disc 2 (reflected light beam 32c) and passes the objective lens 34, the collimator lens 37 and the beam splitter 33 (beam 32d) to reach an optical detector 35. The objective lens 34 is designed to focus the light beam 32b in a focus spot F on the storage layer 2A.

The disc drive apparatus 1 further comprises an actuator system 50, which comprises a radial actuator 51 for radially displacing the objective lens 34 with respect to the disc 2. Since radial actuators are known per se, while the present invention does not relate to the design and functioning of such radial actuator, it is not necessary here to discuss the design and functioning of a radial actuator in great detail.

For achieving and maintaining a correct focusing condition, said objective lens 34 is mounted axially displaceable, while further the actuator system 50 also comprises a focus actuator 52 arranged for axially displacing the objective lens 34 with respect to the disc 2. Since focus actuators are known per se, while further the design and operation of such focus actuator is no subject of the present invention, it is not necessary here to discuss the design and operation of such focus actuator in great detail.

For achieving and maintaining a correct tilt position of the objective lens 34, the objective lens 34 may be mounted slantingly; in such case, as shown, the actuator system 50 also comprises a tilt actuator 53 arranged for pitching the objective lens 34 with respect to the disc 2. Since tilt actuators are known per se, while further the design and operation of such tilt actuator is no subject of the present invention, it is not necessary here to discuss the design and operation of such tilt actuator in great detail.

It is further noted that means for supporting the objective lens with respect to an apparatus frame, and means for axially and radially displacing the objective lens, as well as means for pitching the objective lens, are generally known per se. Since the design and operation of such supporting and displacing means are no subject of the present invention, it is not necessary here to discuss their design and operation in great detail.

It is further noted that the radial actuator 51, the focus actuator 52 and the tilt actuator 53 may be implemented as one integrated actuator.

The disc drive apparatus 1 further comprises a control circuit 90 having a first output 91 coupled to a control input of the radial actuator 51, having a second output 92 coupled to a control input of the focus actuator 52, having a third output 93 coupled to a control input of the tilt actuator 53, having a fourth output 94 coupled to a control input of the motor 4, and having a fifth output 96 coupled to a control input of the laser device 31. The control circuit 90 is designed to generate at its first output 91 a control signal $S_{CR}$ for controlling the radial actuator 51, to generate at its second control output 92 a control signal $S_{CF}$ for controlling the focus actuator 52, to generate at its third output 93 a control signal $S_{CT}$ for controlling the tilt actuator 53, to generate at its fourth output 94 a control signal $S_{CM}$ for controlling the motor 4, and to generate at its fifth output 96 a control signal $S_W$ for controlling the laser.

The control circuit 90 further has a read signal input 95 for receiving a read signal $S_R$ from the optical detector 35. The optical detector 35 may actually comprise several individual detector elements, as is known per se, and the read signal $S_R$ may actually consist of several individual detector element output signals, as is also known per se. Further, the read signal input 95 may actually comprise several individual input signal terminals, each one receiving a corresponding one of the detector element output signals, as is also known per se.

The control circuit 90 is designed to process individual detector element output signals to derive one or more error signals. A radial error signal or tracking error signal, designated hereinafter simply as TES, indicates the radial distance between a track and the focus spot F. A focus error signal, designated hereinafter simply as FES, indicates the axial distance between the storage layer and the focus spot F. It is noted that, depending on the design of the optical detector, different formulas for error signal calculation may be used.

In a reading mode, the intensity of the laser beam 32 is kept substantially constant, and variations in intensity of the individual detector element output signals received at the read signal input 91 reflect the data content of the track being read. The control circuit 90 further comprises a data input 97. In a writing mode, the control circuit 90 generates a control signal Sw for the laser 31 on the basis of a data signal $S_{DATA}$ received at its data input 97, so that the laser beam intensity fluctuates for writing a pattern corresponding to the input data. Distinct intensity levels are also used for erasing a rewritable disc, which may take place while overwriting the existent data or as a stand-alone process that blanks the disc.

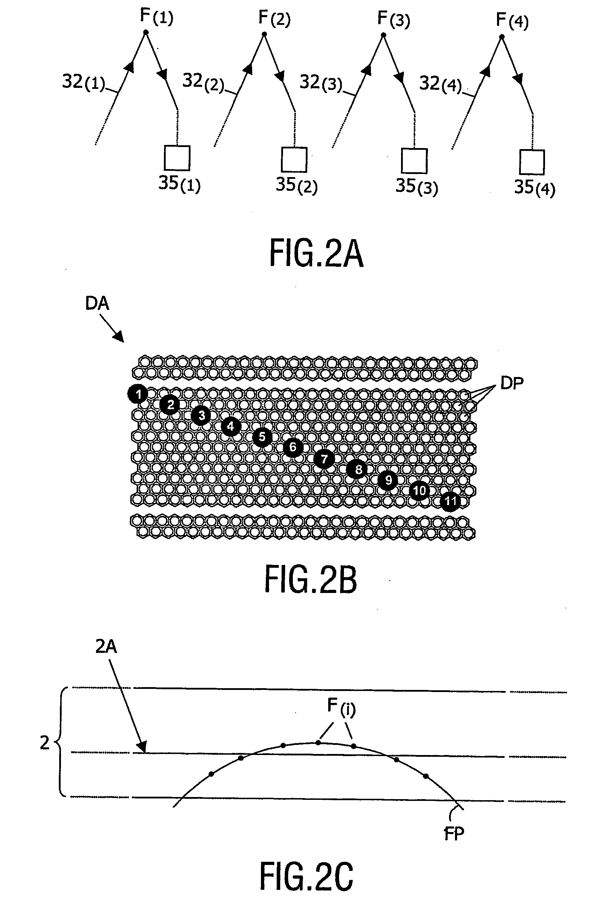

While Fig.1 and the above general description are basically valid for one-spot systems as well as for multi-spot systems, Figures 2A-C illustrate some specific aspects of a multi-spot system. Fig.2A is a view comparable with Fig.1 yet at a larger scale, illustrating that the beam 32 actually comprises multiple individual beams, indicated in general as 32(i). In Fig.2A, only four individual beams 32(1), 32(2), 32(3), 32(4) are shown.

Fig.2A illustrates that each individual beam 32(i) is focussed in a corresponding individual focus spot F(i), and that each individual reflected beam 32(i) is received by a corresponding optical detector 35(i).

Fig.2B is a schematic top view of a portion of a storage layer of an example of a 2D encoded disc, illustrating that data pits DP are arranged in a two-dimensional data array DA, in this example a hexagonal array, which two-dimensional data array DA defines a broad track that is scanned by multiple focus spots, in this example 11 focus spots indicated as a black spot with a white number in it. The multiple focus spots are located on a line which makes an angle with the longitudinal direction of the track (which is the direction from left to right in the drawing), the spot pitch and the said angle being set such that the set of spot spans the entire track.

Fig.2C is a view comparable with Fig.2A yet at a different scale, showing a cross-section of a portion of the disc 2, illustrating in an exaggerated manner that the individual focus spots F(i) are located in a curved focal plane FP. Since shifting the optical lens 34 axially (focal actuator 52) will axially displace all focus spots F(i) of all individual beams 32(i), it is to be expected that, depending on the actual configuration of the set of individual focus spots F(i), only one or two of those individual focus spots F(i) are correctly located, i.e. coincide with the storage layer 2A, which in the illustration holds true for the focus spots F(3) and F(7). All other spots are located at an axial distance from the storage layer 2A.

It should be clear that this situation poses a problem to data read-out: the larger the axial distance between a focus spot and the storage layer, the larger the chance that the corresponding optical detector is not capable to generate a correct data readout signal corresponding to the data pits scanned by this focus spot.

In the following, the axial position of the objective lens 34 will be indicated as Z(lens), while the axial distance between the actual position of the i-th focus spot F(i) and the ideal position of the i-th focus spot F(i) (i.e. coinciding with the storage layer 2A) will be indicated as $\Delta z(i)$.

According to a first aspect of the present invention, the axial position Z(lens) of the objective lens 34 is set such that the overall focussing condition of the multiple beams is as good as possible. This position of the objective lens 34 will be indicated as optimum axial lens position $Z_{OPTIMUM}$, and the corresponding overall focussing condition will be indicated as optimum focussing condition. Thus, it can be said that the optical system 30 is in the optimum focussing condition for

$$Z(\text{lens}) = Z_{OPTIMUM} \tag{1}$$

According to a further aspect of the present invention, the optimum focussing condition is attained when the maximum value of all distances $\Delta z(i)$, indicated as $MAX(\Delta z(i))$, is as low as possible.

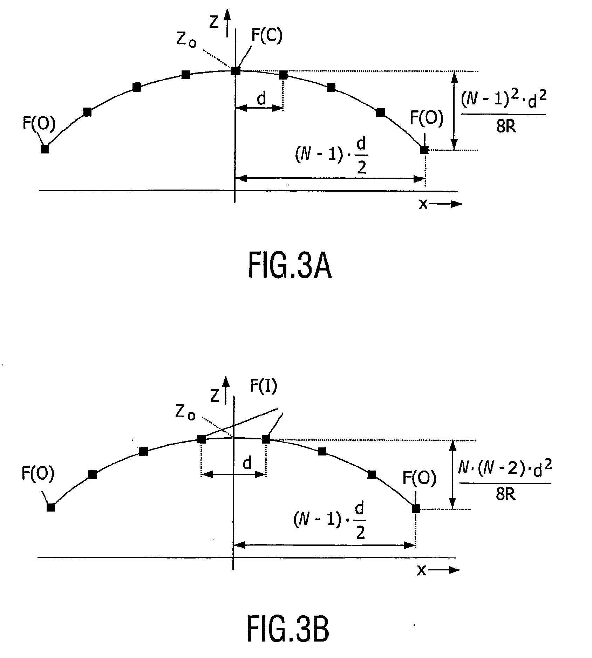

Fig.3A illustrates this aspect for the case that the total number of beams equals an odd number, i.e. 3, 5, 7, ..., while Fig.3B illustrates this aspect for the case that the total number of beams equals an even number, i.e. 2, 4, 6, ... In the following, it is assumed that the multiple focus spots $F(i)$ are arranged according to a symmetrical pattern.

In Figures 3A and 3B, a vertical axis represents the axial position z along the main optical axis, and the horizontal axis represents the distance x between an optical spot and the main optical axis, measured in a direction perpendicular to the optical axis. It is assumed that the x-distance between successive focus spots $F(i)$ and $F(i+1)$ is equal for all focus spots.

In the case of an odd number of spots (Fig.3A), the central spot $F(C)$ is located on the z-axis ($x = 0$), and the x-distance between the central spot $F(c)$ and the outer spots $F(O)$ is equal to $F(O) = (N-1) \cdot d/2$.

In the case of an even number of spots (Fig.3B), two inner spots $F(I)$ are located on opposite sides of the z-axis at distances $x = d/2$, and two outer spots are located on opposite sides of the z-axis at distances $x = (N-1) \cdot d/2$.

In first approximation, the curvature of the focal plane FP close to the optical axis can be described by the formula

$$(z-z_0) = -x^2/(2R) \tag{2}$$

wherein $z_0$ indicates the z-position of the intersection of the focal plane FP with the optical axis, i.e. at $x = 0$; and wherein R indicates the radius of the focal plane FP.

In the case of an odd number of spots (Fig.3A), the central spot $F(C)$ is located at

$$z(C) = z_0, \tag{3}$$

and the outer spots $F(O)$ are located at

$$z(O) = z_0 - [(N-1) \cdot d/2]^2/(2R). \tag{4}$$

Thus, the axial distance between the central spot $F(C)$ and the outer spots $F(O)$ is equal to $(N-1)^2 \cdot d^2/(8R)$. It can easily be seen that the optimum axial lens position $Z_{OPTIMUM}$ satisfies the formula:

$$Z_{OPTIMUM} - z_0 = -(N-1)^2 \cdot d^2/(16R) \tag{5}$$

in which case $MAX(\Delta z(i))$ attains its minimum value:

$$MAX(\Delta z(i))_{MIN} = (N-1)^2 \cdot d^2/(16R) \tag{6}$$

In the case of an even number of spots (Fig.3B), the inner spots $F(I)$ are located at:

$$z(I) = z_0 - [d/2]^2/(2R), \tag{7}$$

and the outer spots $F(O)$ are located at:

$$z(O) = z_0 - [(N-1) \cdot d/2]^2/(2R). \qquad (8)$$

Thus, the axial distance between the inner spots F(I) and the outer spots F(O) is equal to $N \cdot (N-2) \cdot d^2/(8R)$. It can easily be seen that the optimum axial lens position $Z_{OPTIMUM}$ satisfies the formula:

$$Z_{OPTIMUM} - z_0 = -(N^2 - 2N + 2) \cdot d^2/(16R) \qquad (9)$$

in which case $MAX(\Delta z(i))$ attains its minimum value:

$$MAX(\Delta z(i))_{MIN} = N \cdot (N-2) \cdot d^2/(16R) \qquad (10)$$

Although the theoretically optimum solution would be for the control circuit 90 to drive the axial actuator 52 such that the lens position Z(lens) is maintained equal to the optimum axial lens position $Z_{OPTIMUM}$ in accordance with formula (5) or (9), it may be difficult to implement this in practice because it is highly likely that, in this condition, none of the multiple beams is actually in focus on the storage layer 2A, which would make it difficult to obtain a reliable focus error signal. In a preferred axial control system, the control circuit 90 is designed to drive the axial actuator 52 such that at least one of the individual focus spots coincides with the storage layer 2A. Thus, in order to deviate as little as possible from the theoretically optimum solution as defined above, one specific focus spot is selected for focus control, namely the one specific focus spot F(i) for which the difference $z(i) - Z_{OPTIMUM}$ is as small as possible.

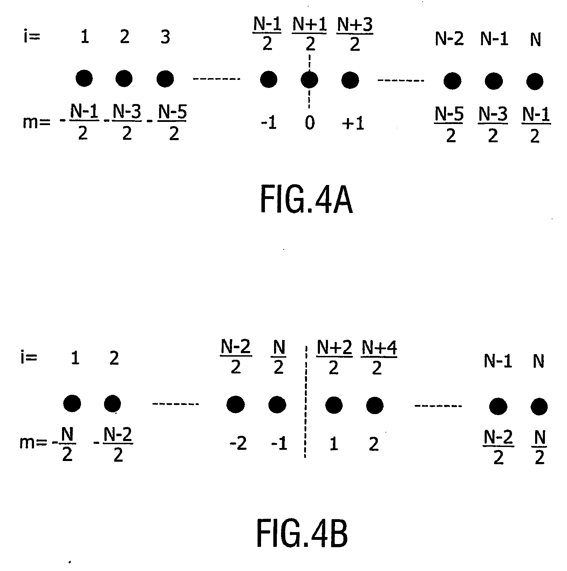

In the following, optical beams and focus spots will be numbered according to a different system, as explained with reference to Figures 4A and 4B.

In the case of an odd number of focus spots F(i) numbered as 1, 2, 3, 4, .... N-1, N, the central spot F(C) would have number (N+1)/2. In the new numbering, as illustrated in Fig.4A, the central spot F(C) will obtain number m=0, its neighbouring spots will obtain numbers m=1 and m=-1, etc, and the outer spots F(O) will obtain numbers m=(N-1)/2 and m=-(N-1)/2. Thus, the x-distance between spot m and the optical axis is equal to $m \cdot d$. Regarding the axial position of spot m, the following formula applies:

$$(z(m) - z_0) = -[m \cdot d]^2/(2R) \qquad (11)$$

Combining this formula with formula (5), it can be seen that the axial distance between the optimum axial lens position $Z_{OPTIMUM}$ and the axial position of spot m can be expressed as

$$z(m) - Z_{OPTIMUM} = (N-1)^2 \cdot d^2/(16R) - [m \cdot d]^2/(2R) \qquad (12)$$

For the optimum spot, the value of the expression of formula (12) should be as small as possible. In the ideal case, this value is equal to zero. It can easily be seen that, in the ideal case, $m = (N-1)/(2\sqrt{2})$ applies, but this is not an integer value.

Thus, according to the invention, an optimum spot number $m_{OPT}$ is selected such that the absolute value of the expression of formula (12) is as small as possible, or, simplified, such that:

$$\left| m_{OPT}^2 - \frac{(N-1)^2}{8} \right|$$

is as small as possible.

In the following, a function $y = INTEGERSQUARE\ \{x\}$ is defined, wherein y is the integer whose square $y^2$ is closest to $x^2$.

Thus, the above requirement is satisfied for

$$m_{OPT} = \pm \text{ INTEGERSQUARE}\{(N-1)/(2\sqrt{2})\} \qquad (13)$$

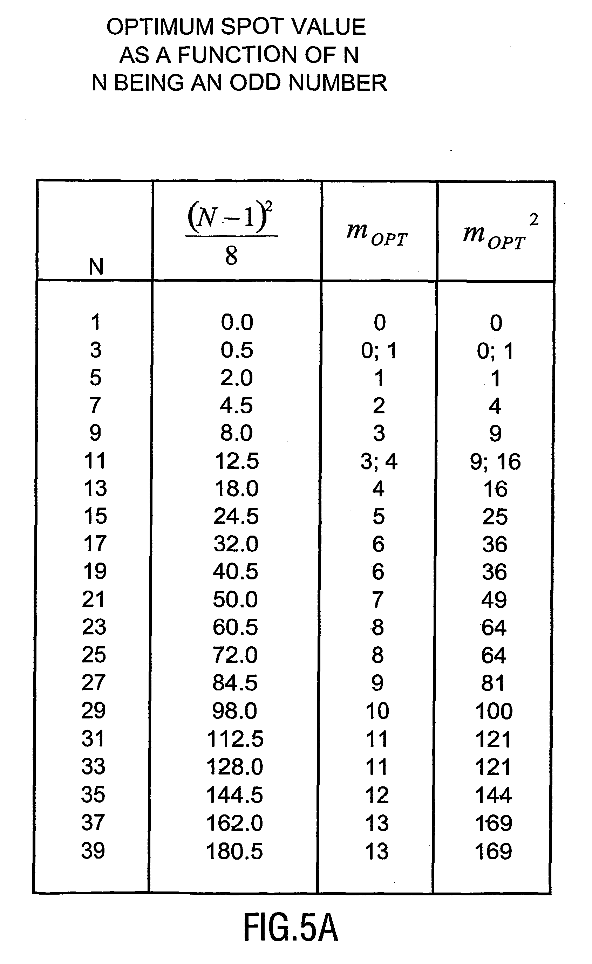

It is noted that the optimum value of m does not depend on d, and does not depend on R; the optimum value ofm only depends on N. Thus, it is possible to make a table showing the optimum value of m as a function of N. Fig.5A is such a table, showing $(N-1)^2/8$ and $m_{OPT}$ for a large number of values ofN. The table also shows $m_{OPT}^2$. It is noted that the $\pm$ possibility is omitted in this table.

It is noted that the case of N=1 is trivial; in fact, it is not even a multiple-beam case.

It is further noted that, in the case of N=3, the solution $m_{OPT}$ =1 (or -1) leads to the central spot F(2) having an axial distance from the storage layer equal to $|z(2)-z(1)|$. Alternatively, the solution $m_{OPT}$ = 0 would lead to the outer spots F(1) and F(3) having said distance from the storage layer. Thus, the out-of-focus condition as defined above is the same for both solutions $m_{OPT}$ = 0 and $m_{OPT}$ = 1.

Likewise, in the case of N=11, $m_{OPT}$ = 3 and $m_{OPT}$ = 4 are equally optimal.

In the case of an even number of focus spots F(i) numbered as 1, 2, 3, 4, .... N-1, N, as illustrated in Fig.4B, the inner spots F(I) will obtain numbers m=1 and m=-1, their neighbouring spots will obtain numbers m=2 and m=-2, etc, and the outer spots F(O) will obtain numbers m=N/2 and m=-N/2. Thus, the x-distance between spot m and the optical axis is equal to (2m-1)·d/2. Regarding the axial position of spot m, the following formula applies:

$$(z(m)-z_0) = -[(2m-1)\cdot d/2]^2/(2R) \qquad (14)$$

Combining this formula with formula (9), it can be seen that the axial distance between the optimum axial lens position $Z_{OPTIMUM}$ and the axial position of spot m can be expressed as:

$$z(m) - Z_{OPTIMUM} = (N^2-2N+2)\cdot d^2/(16R) - [(2m-1)\cdot d/2]^2/(2R) \qquad (15)$$

For the optimum spot, the value of the expression of formula (15) should be as small as possible. In the ideal case, this value is equal to zero. It can easily be seen that, in the ideal case, $4m = 2+\sqrt{(2N^2-4N+4)}$ applies, but then m is usually not an integer.

From formula (15) it can also be seen that, in the ideal case for the optimum spot, m·(m-1) = N·(N-2)/8 applies.

Thus, according to the invention, an optimum spot number $m_{OPT}$ is selected such that the absolute value of the expression of formula (15) is as small as possible, or, simplified, such that:

$$\left| m_{OPT}(m_{OPT} -1) - \frac{N(N-2)}{8} \right|$$

is as small as possible.

In the following, a function z = INTEGERROUND{x} is defined, wherein z is the integer for which z·(z-1) is closest to x.

Thus, the above requirement is satisfied for

$$m_{OPT} = \pm \text{ INTEGERROUND}\{N\cdot(N-2)/8\} \qquad (16)$$

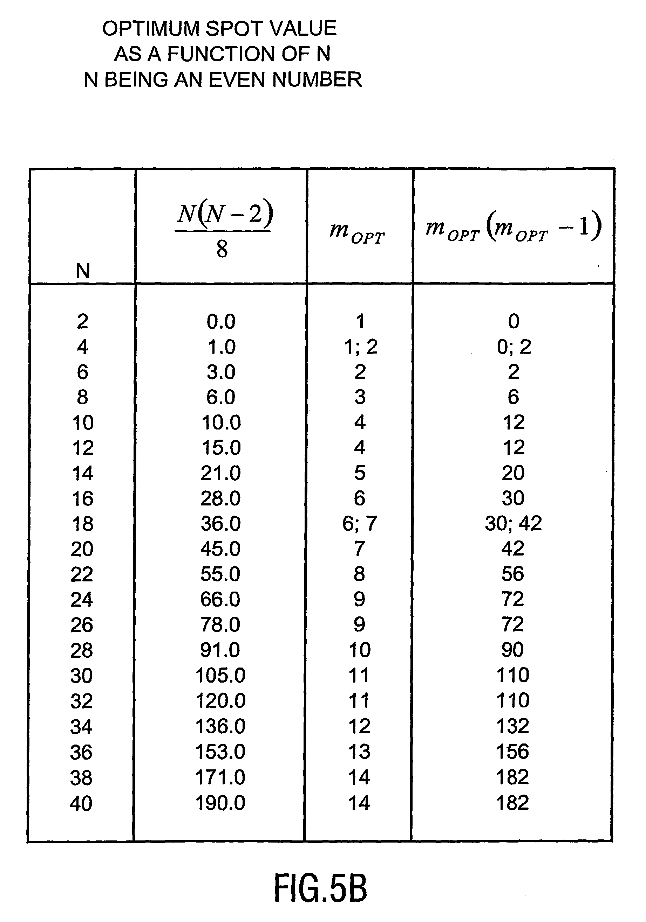

Again, the optimum value of m only depends on N. Fig.5B is a table, showing N·(N-2)/8 and $m_{OPT}$ for a large number of values ofN. The table also shows $m_{OPT}\cdot(m_{OPT}-1)$. It is noted that the $\pm$ possibility is omitted in this table.

It is noted that the case of N=2 is trivial.

It is further noted that, in the case of N=4, the solution $m_{OPT}$ = 2 (or -2) leads to the inner spots F(2) and F(3) having an axial distance from the storage layer equal to $|z(2)-z(1)|$. Alternatively, the solution $m_{OPT}$ = 1 (or -1) would lead to the outer spots F(1) and F(4) having said distance from the storage layer. Thus, the out-of-focus condition as defined above is the same for both solutions $m_{OPT} = 1$ and $m_{OPT} = 2$.

Likewise, in the case of N=18, $m_{OPT} = 6$ and $m_{OPT} = 7$ are equally optimal.

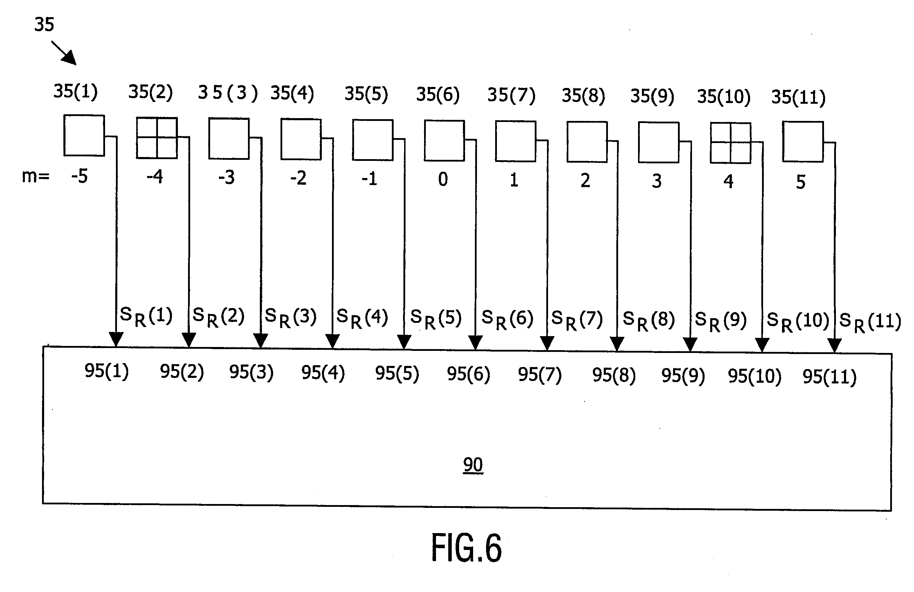

Fig.6 illustrates details of an embodiment of the optical detector 35, suitable for use in a multi-beam optical system. The multi-beam optical detector 35 comprises a plurality of detector units 35(i), arranged adjacent to each other such as to be capable of receiving reflected light beams 32d(i), respectively. If N indicates the number of optical beams 32i, the number of detector units 35(i) should at least be equal to N.

The example of Fig.6 is illustrative for a multi-beam optical system having 11 optical beams 32i. Each detector is shown as a square, above which the reference numerals 35(1), 35(2), .... 35(11) are placed. The light-sensitive surface of the optical detector units 35(i) may actually have the shape of a square, indeed, but this is not essential, so the illustrative shape of a square is not intended to limit the scope of protection.

Further, the numbers -5, -4, .... 5 below the said squares in Fig.6 indicate the respective values of above-mentioned number m for the respective optical detector units 35(i).

Each optical detector unit 35(i) is capable of receiving one single reflected light beam 32d(i), respectively, and of generating an electrical signal $S_R(i)$, respectively, representing the magnitude of the received light. The control system 90 comprises respective inputs 95(i), coupled to receive the respective detector output signals $S_R(i)$.

Furthermore, in accordance with the present invention, at least one of the optical detectors units having $m = \pm m_{OPT}$ is adapted for focus control. An optical detector unit is suitable for focus control if it is capable of generating a signal component or a set of signals from which focus information can be derived. Since focus control is known per se, while further the known per se focus control design may be applied to the optical detectors units for focus control, while further the present invention does not relate to improving the design of an optical detector unit, such design is not explained in great detail here. It is sufficient to mention that such optical detector unit may comprise multiple detector segments, each receiving a portion of the respective light beam, and each generating a corresponding output signal, while the control circuit is designed to combine these output signals in a predetermined way to derive a focus error signal.

In this embodiment, having N=11, $m_{OPT}$ is chosen to be equal to 4 (see Fig.5A), so at least optical detector unit 35(2) or optical detector unit 35(10) is adapted for focus control. In the embodiment as illustrated, both optical detectors units 35(2) and 35(10) are adapted for focus control. Fig.6 shows that each of these optical detectors units 35(2) and 35(10) is subdivided into multiple (four, in this case) detector segments 35(2)A, 35(2)B, 35(2)C, 35(2)D, and 35(10)A, 35(10)B, 35(10)C, 35(10)D, each generating a corresponding output signal $S_R(2)A$, $S_R(2)B$, $S_R(2)C$, $S_R(2)D$, and $S_R(10)A$, $S_R(10)B$, $S_R(10)C$, $S_R(10)D$.

The control circuit 90 receives all of said signals. For focus control, the control circuit 90 may be designed to use only one set of signals $S_R(2)A$, $S_R(2)B$, $S_R(2)C$, $S_R(2)D$ or $S_R(10)A$, $S_R(10)B$, $S_R(10)C$, $S_R(10)D$ generated by one of said optical detectors units 35(2) or 35(10). It is also possible that the control circuit 90 is designed to use both sets of signals, for instance to use an average of said signals according to:

$$S_R A = (S_R(2)A + S_R(10)A)/2$$

$$S_R B = (S_R(2)B + S_R(10)B)/2$$

$$S_R C = (S_R(2)C + S_R(10)C)/2$$

$$S_R D = (S_R(2)D + S_R(10)D)/2$$

It should be clear to a person skilled in the art that the present invention is not limited to the exemplary embodiments discussed above, but that several variations and modifications are possible within the protective scope of the invention as defined in the appending claims.

In the above, the present invention has been explained with reference to block diagrams, which illustrate functional blocks of the device according to the present invention. It is to be understood that one or more of these functional blocks may be implemented in hardware, where the function of such functional block is performed by individual hardware components, but it is also possible that one or more of these functional blocks are implemented in software, so that the function of such functional block is performed by one or more program lines of a computer program or a programmable device such as a microprocessor, microcontroller, digital signal processor, etc.

**Claims**

1. Method for controlling an optical disc drive apparatus (1), the apparatus comprising an optical system (30) for scanning a disc (2) comprising at least one storage layer (2A), the optical system comprising:

   - light beam generating means (31) adapted to generate a plurality of N optical beams (32(i)), wherein N is an odd number larger than 3 or an even number larger than 4;
   - means (33, 34, 37) for focussing said beams (32(i)) in respective focus spots (F(i)) located in a common focal plane (FP) intersecting the optical axis at a position z0 and having, near the optical axis, a radius of curvature R;
   - at least one adjustable member (34) for axially displacing said focus spots (F(i));

   the method comprising the step of:

   - calculating an optimum setting (ZOPTIMUM) for the adjustable member (34), in which the axial position of the storage layer (2A) of the disc (2) is located midway between the axial position of the innermost focus spot(s) (F(C); F(I)) and the axial position of the outermost focus spots (F(O));

   the method being **characterized by** the steps of:

   - calculating an optimum beam number (mOPT), for which the axial position (z(mOPT)) of the corresponding focus spot (F(mOPT)) is closest to the said optimum setting (ZOPTIMUM);
   - controlling the position of the adjustable member (34) to be substantially equal to said axial position (z(mOPT)) of said optimum beam number (mOPT), so that the corresponding focus spot (F(mOPT)) of said optimum beam number (mOPT) substantially coincides with the storage layer (2A) of the disc (2).

2. Method according to claim 1, wherein the adjustable member (34) is an axially displaceable objective lens.

3. Method according to claim 1 or 2,
   wherein N is an odd number;
   wherein the optimum setting (ZOPTIMUM) for the adjustable member (34) satisfies the formula

$$ZOPTIMUM - z0 = -(N-1)2 \cdot d2/(16R)$$

   wherein an optimum beam number (mOPT) satisfies the formula

$$mOPT = \pm INTEGERSQUARE\{(N-1)/(2\sqrt{2})\}$$

   wherein the function y = INTEGERSQUARE {x} is defined as the integer y whose square y2 is closest to x2;
   and wherein m=0 corresponds to the central beam.

4. Method according to claim 1 or 2,
   wherein N is an even number;
   wherein the optimum setting (ZOPTIMUM) for the adjustable member (34) satisfies the formula

$$ZOPTIMUM - z0 = -(N2-2N+2) \cdot d2/(16R)$$

   wherein an optimum beam number (mOPT) satisfies the formula

$$mOPT = \pm INTEGERROUND\{N \cdot (N-2)/8\}$$

wherein the function z= INTEGERROUND{x} is defined as the integer z for which z·(z-1) is closest to x;
and wherein m=±1 corresponds to the inner beams.

**5.** Method according to any of the previous claims, the method further comprising the step of:

- receiving reflected light from a light beam having the optimum beam number (m = mOPT or m = -mOPT);
- deriving a focus error signal from this reflected light beam;
- controlling the positioning of said adjustable member (34) on the basis of this focus error signal.

**6.** Method according to claim 1, the method further comprising the step of:

- receiving reflected light from the two light beams having the optimum beam number
(m1 = mOPT and m2 = -mOPT);
- deriving a focus error signal from these reflected light beams, averaging the contribution of both light beams;
- controlling the positioning of said adjustable member (34) on the basis of this focus error signal.

**7.** Optical disc drive apparatus (1), the apparatus comprising:

- an optical system (30) for scanning a disc (2) comprising at least one storage layer (2A), the optical system comprising:
- light beam generating means (31) adapted to generate a plurality of N optical beams (32(i)), wherein N is an odd number larger than 3 or an even number larger than 4;
- means (33, 34, 37) for focussing said beams (32(i)) in respective focus spots (F(i)) located in a common focal plane (FP) intersecting the optical axis at a position z0 and having, near the optical axis, a radius of curvature R;
- at least one adjustable member (34) for axially displacing said focus spots (F(i));
- an actuator system (50), comprising a controllable focus actuator (52) for axially displacing said adjustable member (34);
- an optical detector arrangement (35), comprising a plurality of detector units (35(i)), each detector unit arranged for receiving reflected light from a corresponding beam (32(i)) and for generating an electrical output signal (SR (i)) representing the received light;
- a control circuit (90), having signal inputs (95(i)) coupled to receive the electrical output signal (SR(i)) of the detector units (35(i)), and adapted to generate a focus control signal (SCF) for the focus actuator (52);

wherein the control circuit is adapted to perform the method of any of claims 1-6.

**8.** Apparatus according to claim 7, wherein a detector unit having an optimum number (35(m=mOPT) or 35(m=-mOPT)) is subdivided into multiple detector segments, each segment for generating a corresponding detector segment output signal;
wherein the control circuit (90) is coupled to receive the detector segment output signals of said detector unit;
wherein the control circuit is adapted to process said detector segment output signals of said detector unit in order to derive a focus error signal;
and wherein the control circuit is adapted to generate its focus control signal (SCF) on the basis of the focus error signal thus obtained.

**9.** Apparatus according to claim 7, wherein both detector units having an optimum number (35(m=mOPT) and 35(m=-mOPT)) are subdivided into multiple detector segments, each segment for generating a corresponding detector segment output signal;
wherein the control circuit (90) is coupled to receive the detector segment output signals of both of said detector units;
wherein the control circuit is adapted to process said detector segment output signals of said detector units in order to derive a focus error signal, averaging the corresponding contributions of both of said detector units;
and wherein the control circuit is adapted to generate its focus control signal (SCF) on the basis of the focus error signal thus obtained.

**Patentansprüche**

**1.** Verfahren zur Steuerung eines optischen Plattenlaufwerkes (1), wobei dieses Laufwerk ein optisches System (30) zum Abtasten einer Platte (2) mit wenigstens einer Speicherschicht (2A) aufweist, wobei das optische System Folgendes umfasst:

- Lichtstrahlerzeugungsmittel (31) zum Erzeugen einer Anzahl von N optischen Strahlen (32(i)), wobei N eine ungerade Zahl größer als 3 oder eine gerade Zahl größer als 4 ist;
- Mittel (33, 34, 37) zum Fokussieren der genannten Strahlen (32(i)) zu Brennpunkten (F(i)) in einer gemeinsamen Brennebene (FP), welche die optische Achse an einer Stelle z0 schneidet und in der Nähe der optischen Achse einen Krümmungsradius R aufweist;
- wenigstens ein einstellbares Element (34) zur axialen Verlagerung der genannten Brennpunkte (F(i));

wobei das Verfahren die nachfolgenden Verfahrensschritte umfasst:

- das Berechnen einer optimalen Einstellung (ZOPTIMUM) für das einstellbare Element (34), wobei die axiale Lage der Speicherschicht (2A) der Platte (2) sich in der Mitte zwischen der axialen Lage der innersten Brennpunkte (F(C); F(I)) und der axialen Lage der äußersten Brennpunkte (F(O)) befindet;

wobei das Verfahren durch die nachfolgenden Verfahrensschritte **gekennzeichnet** ist:

- das Berechnen einer optimalen Strahlenzahl (mOPT), für welche die axiale Lage (z(mOPT)) des entsprechenden Brennpunktes (F(mOPT)) der genannten optimalen Einstellung (ZOPTIMUM) am nächsten liegt;
- das Steuern der Lage des einstellbaren Elementes (34), derart, dass diese Lage der genannten axialen Lage (z(mOPT)) der genannten optimalen Strahlenzahl (mOPT) im Wesentlichen entspricht, so dass der entsprechende Brennpunkt (F(mOPT)) der genannten optimalen Strahlenzahl (mOPT) mit der Speicherschicht (2A) der Platte (2) im Wesentlichen zusammenfällt.

2. Verfahren nach Anspruch 1m wobei das einstellbare Element (34) eine axial verlagerbare Objektivlinse ist.

3. Verfahren nach Anspruch 1 oder 2,
   wobei N eine ungerade Zahl ist;
   wobei die optimale Einstellung (ZOPTIMUM) für das einstellbare Element (34) der nachstehenden Formel entspricht:

$$ZOPTIMUM - z0 = -(N-1)2 \cdot d2/(16R)$$

wobei eine optimale Strahlenzahl (mOPT) der nachstehenden Formel entspricht:

$$mOPT = \pm \text{ INTEGERSQUARE } \{(N-1)/(2\sqrt{2})\}$$

wobei die Funktion y = INTEGERSQUARE{x} als die Ganzzahl y definiert ist, deren Quadrat $y^2$ dem Wert x2 nahe liegt; und wobei m=0 dem zentralen Strahl entspricht.

4. Verfahren nach Anspruch 1 oder 2,
   wobei N eine gerade Zahl ist,
   wobei die optimale Einstellung (ZOPTIMUM) für das einstellbare Element (34) der nachstehenden Formel entspricht:

$$ZOPTIMUM - z0 = -(N2-2N+2) \cdot d2/(16R)$$

wobei eine optimale Strahlenzahl (mOPT) der nachstehenden Formel entspricht:

$$mOPT = \pm \text{ INTEGERROUND}\{N \cdot (N-2)/8\}$$

wobei die Funktion z = INTEGERROUND {x} als die Ganzzahl z definiert wird, für die z·(z-1) dem Wert x am nächsten liegt; und wobei m = ±1 den inneren Strahlen entspricht.

5. Verfahren nach einem der vorstehenden Ansprüche, wobei das Verfahren weiterhin die nachfolgenden Verfahrensschritte umfasst:

   - das Empfangen von reflektiertem Licht von einem Lichtstrahl mit der optimalen Strahlenzahl (m = mOPT oder m = -mOPT);
   - das Herleiten eines Fokusfehlersignals aus diesem reflektierten Lichtstrahl;
   - das Steuern der Positionierung des genannten einstellbaren Elementes (34) auf Basis dieses Fokusfehlersignals.

6. Verfahren nach Anspruch 1, wobei das Verfahren weiterhin die nachfolgenden Verfahrensschritte umfasst:

   - das Empfangen von reflektiertem Licht von den zwei Lichtstrahlen mit der optimalen Strahlenzahl

$$(m1 = mOPT \text{ und } m2 = -mOPT);$$

   - das Herleiten eines Fokusfehlersignals aus diesen reflektierten Lichtstrahlen, wobei der Beitrag der beiden Lichtstrahlen gemittelt wird;
   - das Steuern der Positionierung des genannten einstellbaren Elementes (35) auf Basis dieses Fokusfehlersignals.

7. Optisches Plattenlaufwerk (1), wobei das Laufwerk Folgendes umfasst:

   - ein optisches System (30) zum Abtasten einer Platte (2) mit wenigstens einer Speicherschicht (2A), wobei das optische System Folgendes umfasst:
   - Lichtstrahlerzeugungsmittel (31) zum Erzeugen einer Anzahl von N optischen Strahlen (32(i)), wobei N eine ungerade Zahl größer als 3 oder eine gerade Zahl größer als 4 ist;
   - Mittel (33, 34, 37) zum Fokussieren der genannten Strahlen (32(i)) zu betreffenden Brennpunkten (F(i)) in einer gemeinsamen Brennebene (FP), welche die optische Achse an einer Stelle z0 schneidet und in der Nähe der optischen Achse einen Krümmungsradius R aufweist;
   - wenigstens ein einstellbares Element (34) zur axialen Verlagerung der genannten Brennpunkte (F(i));
   - ein Stellgliedsystem (50) mit einem steuerbaren Fokussierstellglied (52) zur axialen Verlagerung des genannten einstellbaren Elementes (34);
   - eine optische Detektoranordnung (35) mit einer Anzahl Detektoreinheiten (35(i)), wobei jede Detektoreinheit vorgesehen ist zum Empfangen reflektierten Lichtes von einem entsprechenden Strahl (32(i)) und zum Erzeugen eines elektrischen Ausgangssignals (SR(i)), das das empfangene Licht darstellt;
   - eine Steuerschaltung (90) mit Signaleingängen (95(i)), zum Empfangen des elektrischen Ausgangssignals (SR(i)) der Detektoreinheiten (35(i)) und zum Erzeugen eines Fokussteuersignals (SCF) für das Fokussierstellglied (52);

   wobei die Steuerschaltung dazu vorgesehen ist, das Verfahren nach einem der Ansprüche 1 bis 6 durchzuführen.

8. Plattenlaufwerk nach Anspruch 7, wobei eine Detektoreinheit eine optimale Anzahl (35(m=mOPT) oder 35(m=-mOPT)) in mehrere Detektorsegmente aufgeteilt ist,
   wobei jedes Segment ein entsprechendes Detektorsegmentausgangssignal erzeugt;
   wobei die Steuerschaltung (90) die Detektorsegmentausgangssignale der genannten Detektoreinheit empfängt;
   wobei die Steuerschaltung die genannten Detektorsegmentausgangssignale der genannten Detektoreinheit verarbeit, und zwar zum Herleiten eines Fokusfehlersignals; und
   wobei die Steuerschaltung dazu vorgesehen ist, das Fokussteuersignal (SCF) auf Basis des auf diese Art und Weise erhaltenen Fokusfehlersignals zu erzeugen.

9. Plattenlaufwerk nach Anspruch 7, wobei die beiden Detektoreinheiten mit einer optimalen Zahl (35(m=mOPT) und 35(m=-mOPT)) in mehrere Detektorsegmente aufgeteilt sind, jedes Segment zur Erzeugung eines entsprechenden Detektorsegmentausgangssignals;
   wobei die Steuerschaltung (90) derart gekoppelt ist, dass sie die Detektorsegmentausgangssignale der beiden genannten Detektoreinheiten empfängt;
   wobei die Steuerschaltung dazu vorgesehen ist, die genannten Detektorsegmentausgangssignale der genannten Detektoreinheiten zu verarbeiten, und zwar zum Herleiten eines Fokusfehlersignals, wobei die entsprechenden Beiträge der beiden genannten Detektoreinheiten gemittelt werden; und

wobei die Steuerschaltung dazu vorgesehen ist, das Fokussteuersignal (SCF) auf Basis des auf diese Art und Weise erhaltenen Fokusfehlersignals zu erzeugen.

**Revendications**

1. Procédé de commande d'un lecteur de disque optique (1), le lecteur comprenant un système optique (30) pour balayer un disque (2) comprenant au moins une couche de mémorisation (2A), le système optique comprenant :

   - des moyens de génération de faisceaux lumineux (31) conçus pour générer une pluralité de N faisceaux optiques (32(i)), où N est un nombre impair supérieur à 3 ou un nombre pair supérieur à 4 ;
   - des moyens (33, 34, 37) pour focaliser lesdits faisceaux (32(i)) sur des points de focalisation respectifs (F(i)) se trouvant dans un plan focal commun (FP) coupant l'axe optique à une position z0 et ayant, à proximité de l'axe optique, un rayon de courbure R ;
   - au moins un élément ajustable (34) pour déplacer axialement lesdits points de focalisation (F(i)) ;
   le procédé comprenant l'étape consistant à :
   - calculer un réglage optimal (ZOPTIMUM) pour l'élément ajustable (34), dans lequel la position axiale de la couche de mémorisation (2A) du disque (2) se trouve à mi-chemin entre la position axiale du (des) point(s) de focalisation les plus à l'intérieur (F(C) ; F(I)) et la position axiale des points de focalisation les plus à l'extérieur (F(O)) ;
   le procédé étant **caractérisé par** les étapes consistant à :
   - calculer un nombre de faisceaux optimal (mOPT), pour lequel la position axiale (z(mOPT)) du point de focalisation correspondant (F(mOPT)) est la plus proche dudit réglage optimal (ZOPTIMUM) ;
   - contrôler la position de l'élément ajustable (34) pour qu'elle soit sensiblement égale à ladite position axiale (z(mOPT)) dudit nombre de faisceaux optimal (mOPT), de telle sorte que le point de focalisation correspondant (F(mOPT)) dudit nombre de faisceaux optimal (mOPT) coïncide sensiblement avec la couche de mémorisation (2A) du disque (2).

2. Procédé selon la revendication 1, dans lequel l'élément ajustable (34) est une lentille d'objectif déplaçable axialement.

3. Procédé selon la revendication 1 ou 2,
   dans lequel N est un nombre impair ;
   dans lequel le réglage optimal (ZOPTIMUM) pour l'élément ajustable (34) satisfait la formule

$$ZOPTIMUM - z0 = -(N - 1)2 \cdot d2/(16R)$$

   dans lequel un nombre de faisceaux optimal (mOPT) satisfait la formule

$$mOPT = \pm INTEGERSQUARE \{(N - 1)/(2\sqrt{2})\}$$

   dans lequel la fonction y = INTEGERSQUARE{x} est définie comme l'entier y dont le carré y2 est le plus proche de x2 ;
   et dans lequel m = 0 correspond au faisceau central.

4. Procédé selon la revendication 1 ou 2,
   dans lequel N est un nombre pair ;
   dans lequel le réglage optimal (ZOPTIMUM) pour l'élément ajustable (34) satisfait la formule

$$ZOPTIMUM - z0 = -(N2 - 2N + 2) \cdot d2/(16R)$$

   dans lequel un nombre de faisceaux optimal (mOPT) satisfait la formule

$$mOPT = \pm \, INTEGERROUND \, \{N \cdot (N - 2)/8\}$$

dans lequel la fonction z = INTEGERROUND {x} est définie comme l'entier z pour lequel z · (z - 1) est le plus proche de x ;

et dans lequel m = ± 1 correspond aux faisceaux internes.

5. Procédé selon l'une quelconque des revendications précédentes, le procédé comprenant en outre l'étape consistant à :

- recevoir la lumière réfléchie d'un faisceau lumineux ayant le nombre de faisceaux optimal (m = mOPT ou m = -mOPT) ;
- dériver un signal d'erreur de focalisation de ce faisceau lumineux réfléchi ;
- commander le positionnement dudit élément ajustable (34) sur la base de ce signal d'erreur de focalisation.

6. Procédé selon la revendication 1, le procédé comprenant en outre l'étape consistant à :

- recevoir la lumière réfléchie des deux faisceaux lumineux ayant le nombre de faisceaux optimal (m1 = mOPT et m2 = -mOPT) ;
- dériver un signal d'erreur de focalisation de ces faisceaux lumineux réfléchis, en moyennant la contribution des deux faisceaux lumineux ;
- commander le positionnement dudit élément ajustable (34) sur la base de ce signal d'erreur de focalisation.

7. Lecteur de disque optique (1), le lecteur comprenant :

- un système optique (30) pour balayer un disque (2) comprenant au moins une couche de mémorisation (2A), le système optique comprenant :
- des moyens de génération de faisceaux lumineux (31) conçus pour générer une pluralité de N faisceaux optiques (32(i)), où N est un nombre impair supérieur à 3 ou un nombre pair supérieur à 4 ;
- des moyens (33, 34, 37) pour focaliser lesdits faisceaux (32(i)) sur des points de focalisation respectifs (F(i)) se trouvant dans un plan focal commun (FP) coupant l'axe optique à une position z0 et ayant, à proximité de l'axe optique, un rayon de courbure R ;
- au moins un élément ajustable (34) pour déplacer axialement lesdits points de focalisation (F(i)) ;
- un système actionneur (50), comprenant un actionneur de focalisation contrôlable (52) pour déplacer axialement ledit élément ajustable (34) ;
- un agencement de détection optique (35), comprenant une pluralité d'unités de détection (35(i)), chaque unité de détection étant agencée pour recevoir la lumière réfléchie d'un faisceau correspondant (32(i)) et pour générer un signal de sortie électrique (SR(i)) représentant la lumière reçue ;
- un circuit de commande (90), ayant des entrées de signal (95(i)) couplées pour recevoir le signal de sortie électrique (SR(i)) des unités de détection (35(i)), et conçu pour générer un signal de commande de focalisation (SCF) pour l'actionneur de focalisation (52) ;

dans lequel le circuit de commande est conçu pour effectuer le procédé selon l'une quelconque des revendications 1 à 6.

8. Lecteur selon la revendication 7, dans lequel une unité de détection ayant un nombre optimal ((35(m = mOPT) ou 35(m = -mOPT)) est subdivisée en de multiples segments de détection, chaque segment pour générer un signal de sortie de segment de détection correspondant ;

dans lequel le circuit de commande (90) est couplé pour recevoir les signaux de sortie de segments de détection de ladite unité de détection ;

dans lequel le circuit de commande est conçu pour traiter lesdits signaux de sortie de segments de détection de ladite unité de détection afin de dériver un signal d'erreur de focalisation ;

et dans lequel le circuit de commande est conçu pour générer son signal de commande de focalisation (SCF) sur la base du signal d'erreur de focalisation ainsi obtenu.

9. Lecteur selon la revendication 7, dans lequel les deux unités de détection ayant un nombre optimal ((35(m = mOPT) et 35(m = -mOPT)) sont subdivisées en segments de détection multiples, chaque segment pour générer un signal de sortie de segment de détection correspondant ;

dans lequel le circuit de commande (90) est couplé pour recevoir les signaux de sortie de segments de détection des deux dites unités de détection ;

dans lequel le circuit de commande est conçu pour traiter lesdits signaux de sortie de segments de détection desdites unités de détection afin de dériver un signal d'erreur de focalisation, en moyennant les contributions correspondantes des deux dites unités de détection ;

et dans lequel le circuit de commande est conçu pour générer son signal de commande de focalisation (SCF) sur la base du signal d'erreur de focalisation ainsi obtenu.

FIG.1

F(1)  F(2)  F(3)  F(4)

32(1)  32(2)  32(3)  32(4)

35(1)  35(2)  35(3)  35(4)

## FIG.2A

DA

DP

1 2 3 4 5 6 7 8 9 10 11

## FIG.2B

2A

F(i)

2

FP

## FIG.2C

FIG.3A

FIG.3B

i=    1    2    3        $\frac{N-1}{2}$ $\frac{N+1}{2}$ $\frac{N+3}{2}$     N-2  N-1   N

● ● ●  ------  ● ● ●  ------  ● ● ●

m= $-\frac{N-1}{2}$ $-\frac{N-3}{2}$ $-\frac{N-5}{2}$     -1    0    +1     $\frac{N-5}{2}$ $\frac{N-3}{2}$ $\frac{N-1}{2}$

## FIG.4A

i=    1    2        $\frac{N-2}{2}$ $\frac{N}{2}$   $\frac{N+2}{2}$ $\frac{N+4}{2}$     N-1   N

● ●  -------  ● ● ┊ ● ●  -------  ● ●

m= $-\frac{N}{2}$ $-\frac{N-2}{2}$     -2   -1 ┊ 1    2     $\frac{N-2}{2}$ $\frac{N}{2}$

## FIG.4B

## OPTIMUM SPOT VALUE
## AS A FUNCTION OF N
## N BEING AN ODD NUMBER

| N | $\dfrac{(N-1)^2}{8}$ | $m_{OPT}$ | $m_{OPT}^2$ |
|---|---|---|---|
| 1 | 0.0 | 0 | 0 |
| 3 | 0.5 | 0; 1 | 0; 1 |
| 5 | 2.0 | 1 | 1 |
| 7 | 4.5 | 2 | 4 |
| 9 | 8.0 | 3 | 9 |
| 11 | 12.5 | 3; 4 | 9; 16 |
| 13 | 18.0 | 4 | 16 |
| 15 | 24.5 | 5 | 25 |
| 17 | 32.0 | 6 | 36 |
| 19 | 40.5 | 6 | 36 |
| 21 | 50.0 | 7 | 49 |
| 23 | 60.5 | 8 | 64 |
| 25 | 72.0 | 8 | 64 |
| 27 | 84.5 | 9 | 81 |
| 29 | 98.0 | 10 | 100 |
| 31 | 112.5 | 11 | 121 |
| 33 | 128.0 | 11 | 121 |
| 35 | 144.5 | 12 | 144 |
| 37 | 162.0 | 13 | 169 |
| 39 | 180.5 | 13 | 169 |

## FIG.5A

OPTIMUM SPOT VALUE
AS A FUNCTION OF N
N BEING AN EVEN NUMBER

| N | $\dfrac{N(N-2)}{8}$ | $m_{OPT}$ | $m_{OPT}\left(m_{OPT}-1\right)$ |
|---|---|---|---|
| 2 | 0.0 | 1 | 0 |
| 4 | 1.0 | 1; 2 | 0; 2 |
| 6 | 3.0 | 2 | 2 |
| 8 | 6.0 | 3 | 6 |
| 10 | 10.0 | 4 | 12 |
| 12 | 15.0 | 4 | 12 |
| 14 | 21.0 | 5 | 20 |
| 16 | 28.0 | 6 | 30 |
| 18 | 36.0 | 6; 7 | 30; 42 |
| 20 | 45.0 | 7 | 42 |
| 22 | 55.0 | 8 | 56 |
| 24 | 66.0 | 9 | 72 |
| 26 | 78.0 | 9 | 72 |
| 28 | 91.0 | 10 | 90 |
| 30 | 105.0 | 11 | 110 |
| 32 | 120.0 | 11 | 110 |
| 34 | 136.0 | 12 | 132 |
| 36 | 153.0 | 13 | 156 |
| 38 | 171.0 | 14 | 182 |
| 40 | 190.0 | 14 | 182 |

FIG.5B

EP 1 769 499 B1

35

| 35(1) | 35(2) | 3 5 ( 3 ) | 35(4) | 35(5) | 35(6) | 35(7) | 35(8) | 35(9) | 35(10) | 35(11) |

m=  -5    -4    -3    -2    -1    0    1    2    3    4    5

$S_R(1)$  $S_R(2)$  $S_R(3)$  $S_R(4)$  $S_R(5)$  $S_R(6)$  $S_R(7)$  $S_R(8)$  $S_R(9)$  $S_R(10)$  $S_R(11)$

95(1)  95(2)  95(3)  95(4)  95(5)  95(6)  95(7)  95(8)  95(9)  95(10)  95(11)

90

# FIG.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9919868 A